# EUROPEAN PATENT APPLICATION

(11) **EP 4 810 330 A1**
(43) Date of publication of application: **23.09.2026**
(21) Application number: 25164320.1
(22) Date of filing: 18.03.2025
(51) Int. Cl.: B60S 1/48, B60S 1/52, B60S 1/54, B60S 1/56

(54) **FLUID DISTRIBUTION SYSTEM FOR THE MONITORED CLEANING OF A SENSOR OF A MOTOR VEHICLE**

(71) Applicant: A. RAYMOND ET CIE, 38000 Grenoble (FR)
(72) Inventor: ZIMMER, Jochen, 79733 Görwihl (DE)
(74) Representative: Hoffmann Eitle

(57) **Abstract**

The present invention pertains to a fluid distribution system for the monitored cleaning of a sensor of a motor vehicle, wherein the fluid distribution system comprises at least one high pressure fluid source (2) configured to provide a fluid under pressure, wherein the fluid distribution system comprises at least one nozzle (4), wherein the fluid distribution system comprises at least one valve (6) configured to regulate the flow through the at least one nozzle (4), wherein the fluid distribution system comprises a connection means (8), wherein the connection means (8) fluidly connects the at least one high pressure fluid source (2) and the at least one valve (6), wherein the fluid distribution assembly comprises at least one pressure sensor (10), wherein the at least one pressure sensor (10) is configured to measure a pressure in the connection means (8).

## Description

### FIELD OF THE INVENTION

The present invention pertains to a fluid distribution system for the monitored cleaning of a sensor of a motor vehicle.

### BACKGROUND OF THE INVENTION

The fluid distribution system for the monitored cleaning of a sensor of a motor vehicle is an essential part of the motor vehicle. The fluid distribution system cleans the sensor of the motor vehicle. The sensor is for example a camera, a LiDAR sensor or a radar sensor. The sensor is arranged on the motor vehicle and assists the driver, for example by showing or scanning the surroundings. In addition, the sensor is mandatory for autonomous driving as it is the basis for autonomous driving because it provides information about the surroundings to maneuver the motor vehicle autonomously.

The proper function of the sensor is important to provide clear information for the driver or the autonomous driving. Here, the soiling of the sensor is a limitation of the sensor and hence the autonomous driving. If the sensor is dirty, it can provide no information or wrong information which reduces the safety of the motor vehicle. The soiling of the sensor is for example dirt and dust, which strongly depends on the circumstance like the weather.

Hence, it is crucial for performance and vehicle safety that the sensor is clean. Consequently, the cleaning of the sensor is important. Here, it is also important to monitor the cleaning of the sensor to ensure proper cleaning of the sensor. Currently, the sensor identifies a soiling, which triggers a cleaning of the sensor. After cleaning the sensor, the sensor checks if the cleaning was successful. However, this process is time-consuming and can lead to an interruption of the drive. Thus, a quicker evaluation of the cleaning would be helpful so that the driving or the autonomous driving is continued without an interruption for cleaning the sensor.

In addition, the resources like the amount of fluid, for example water and/or a detergent are limited. Thus, the consumption of the fluid should be efficient, so that the fluid distribution system must ensure efficient cleaning with minimal consumption of the fluid. This is also important for the environmental friendliness of the fluid distribution system.

Based on this prior art it is the object of the invention to provide a fluid distribution system for the monitored cleaning of a sensor of a motor vehicle, which provides a quick, monitored efficient and environmentally friendly cleaning of the sensor.

### SUMMARY OF THE INVENTION

According to a first aspect of the invention the above-mentioned task is solved by a fluid distribution system for the monitored cleaning of a sensor of a motor vehicle, wherein the fluid distribution system comprises at least one high pressure fluid source configured to provide a fluid under pressure, wherein the fluid distribution system comprises at least one nozzle, wherein the fluid distribution system comprises at least one valve configured to regulate the flow through the at least one nozzle, wherein the fluid distribution system comprises a connection means, wherein the connection means fluidly connects the at least one high pressure fluid source and the at least one valve, wherein the fluid distribution assembly comprises at least one pressure sensor, wherein the at least one pressure sensor is configured to measure a pressure in the connection means.

In doing so, the fluid distribution system provides a quick, monitored efficient and environmentally friendly cleaning of the sensor. Due to the at least one pressure sensor the pressure in the connection means is measured. Based on the measured pressure the cleaning of the sensor can be evaluated. For example, the measured pressure can refer to the amount of fluid used, the cleaning time and/or the force of the fluid on the sensor. Thus, based on the measured pressure the cleaning of the sensor can be evaluated. In addition, the measured pressure provides an easy way to quickly monitor the cleaning. Hence, the fluid distribution system is efficient. Moreover, the monitoring of the cleaning by the measured pressure leads to an efficient and thus environmentally friendly cleaning.

The fluid distribution system can be used for a monitored cleaning of a sensor. The fluid distribution system can be arranged inside a motor vehicle. The fluid distribution system can comprise components for the distribution of the fluid and components for controlling the distribution of the fluid.

Monitored cleaning of a sensor of a motor vehicle can mean that the result of the cleaning can be verified, checked and/or controlled.

A motor vehicle can be any vehicle powered by a motor. A motor vehicle can be preferably a land vehicle, and more preferably a car.

The high pressure fluid source configured to provide the fluid under pressure can be a tank. The high pressure fluid source can be configured to store the fluid under pressure. The high pressure fluid source can be configured to provide the fluid under a pressure above atmospheric pressure. The high pressure fluid source can be configured to provide the fluid under a pressure greater than 8 bar, preferably greater than 12 bar, even more preferably greater than 15 bar.

The at least one nozzle can be configured to spray the fluid on the sensor. The at least one nozzle can be configured to eject the fluid under pressure. The at least one nozzle can be configured to direct the fluid under pressure on the sensor. The at least one nozzle can be configured so that the spray jet is adapted to the sensor dimensions.

The at least one valve can be, for example, a magnetic valve. The at least one valve can have two conditions, for example open or closed. The at least one valve can have multiple conditions to regulate the flow rate. The at least one valve can be electrically controllable. The at least one valve is configured to regulate the flow through the at least one nozzle. The regulation of the flow through the at least one nozzle can distinguish between two states, namely open or closed. The regulation of the flow through the at least one nozzle can distinguish between multiple states with different flow rates.

The connection means can comprise for example tubes, hoses, distributors and/or joints. The connections means can be linear, or the connection means can be branched. The connection means can be impermeable to the fluid.

The connection means fluidly connects the at least one high pressure fluid source and the at least one valve. For example, the connection means can fluidly connect the at least one high pressure fluid source and the at least one valve by tubes, hoses, distributors and/or joints. For example, by the connections means the fluid can be transported loss-free from the at least one high pressure fluid source to the at least one valve.

The fluid distribution assembly comprises at least one pressure sensor. The at least one pressure sensor can be configured to measure the pressure of the fluid. The at least one pressure sensor can be for example a piezo resistive pressure sensor. The at least one pressure sensor can be configured to output the measured pressure. For example, the at least one pressure sensor can be configured to display the measured pressure and/or to output the measured pressure as an electrical signal.

The at least one pressure sensor can be arranged before the at least one valve. For example, if the connection means can comprise multiple branches, one pressure sensor can be arranged on each branch. For example, if the connection means can be a star system a pressure sensor can be arranged at each branch of the star system.

The at least one pressure sensor is configured to measure the pressure in the connection means. For example, the at least one pressure sensor is configured to measure the pressure of the fluid in the connection means. The measured pressure can be for example the pressure the at least one pressure sensor is configured to measure. The measured pressure can be an absolute value. The measured pressure can be a relative value. The measured pressure can be a change in pressure. The measured pressure can be a pressure curve. For example, the at least one pressure sensor can be configured to measure the pressure in the connection means continuously. For example, the at least one pressure sensor is configured to measure the pressure of the fluid in the connection mean continuously.

In an embodiment the fluid distribution system can comprise a control means, wherein the at least one pressure sensor can be configured to send the measured pressure to the control means, and/or wherein the control means can be configured to send a control signal to the at least one valve to open and/or to close the at least one valve.

If the at least one pressure sensor can be configured to send the measured pressure to the control means, the control means can collect the data of the pressure simplifying the monitoring. For example, based on the measured pressure the control means can determine if the fluid under pressure can have enough pressure. In particular, the functionality of the fluid distribution system and hence of the cleaning can be monitored. Hence, the fluid distribution system can provide a quick, monitored efficient and environmentally friendly cleaning of the sensor.

If the control means can be configured to send a control signal to the at least one valve to open or close the at least one valve, the control can be simplified and hence more efficient.

If the at least one pressure sensor can be configured to send the measured pressure to the control means, and wherein the control means can be configured to send a control signal to the at least one valve to open and/or to close the at least one valve, the fluid distribution system can easily and efficiently monitor the cleaning.

The at least one pressure sensor can be configured to send the measured pressure to the control means. For example, the at least one pressure sensor can be configured to send the measured pressure continuously to the control means. In particular, the at least one pressure sensor can be configured to send the measured pressure to the control means as a value. Alternatively, the at least one pressure sensor can be configured to send the measured pressure to the control means as an interpretation for example as a change in percentage.

The control means can be configured to send a control signal to the at least one valve to open and/or to close the at least one valve. The control signal can make the at least one valve open and/or to close. The control signal can be an electrical signal. In particular, the control signal can be emitting the electrical signal or the absence of the electrical signal. For example, emitting the electrical signal can open the valve, while the absence of the electrical signal can close the valve. The control signal can comprise a plurality of commands. For example, the control signal can comprise an open command and a close command. For example, the control signal can comprise a plurality of open commands and a plurality of close commands.

In an embodiment the control means can be configured to monitor the cleaning based on the measured pressure.

To clean the sensor the fluid under pressure can be ejected by the at least one nozzle. The ejection of the fluid under pressure can lead to a pressure drop which can correlate to the amount of used cleaning fluid, cleaning time and thus to the cleaning of the sensor. Therefore, the fluid distribution system can provide a quick, monitored efficient and environmentally friendly cleaning of the sensor.

The measured pressure can be influenced by the opening and/or the closing of the at least one valve. For example, a reduction of the measured pressure can correlate with the opening of the at least one valve. Especially, the control means can monitor the opening of the at least one valve based on the reduction of the measured pressure. In addition, for example, the increase of the measured pressure can correlate with the closing of the at least one valve. In particular, a measured pressure peak higher than the average pressure can indicate the closing of the at least one valve. Especially, the control means can monitor the closing of the at least one valve based on the reduction of the measured pressure, preferably based on the measured pressure peak. Further, for example, the time difference between the reduction of the measured pressure and the increase of the measured pressure, in particular a measured pressure peak, can indicate the cleaning time. Especially, the control means can monitor the cleaning time based on the time difference between the reduction of the measured pressure and the increase of the measured pressure, in particular a measured pressure peak.

The control means can be configured to adapt the control signal based on the measured pressure, in particular to improve the cleaning. For example, due to a low temperature the viscosity of the fluid can be increased so that the closing of the valve can take more time. Hence, for example, the control means can adapt the control signal so that the control means can send the control signal for closing the valve at a low temperature earlier as at high temperature.

The control means can comprise hardware components and/or software components. For example, the control means can comprise at least one memory comprising program instructions of a computer program (e.g. the computer program disclosed below) and at least one processor adapted to execute program instructions from the at least one memory. Accordingly, a device is also to be understood as disclosed comprising at least one processor and at least one memory with program instructions, wherein the at least one memory and the program instructions are arranged, together with the at least one processor, to cause the device to perform the method according to the invention.

Alternatively or additionally, the control means may further comprise one or more communication interfaces (e.g. one or more wired and/or wireless communication interfaces, e.g. a wireless communication interface in the form of a radio interface) and/or one or more user interfaces (e.g. a keyboard, a mouse, a screen, a touch sensitive screen, a speaker, a microphone, etc.). It is understood that the disclosed device may also comprise other means not listed.

In an embodiment the control means can be configured to compare the control signal with the measured pressure to monitor the cleaning.

In doing so, the monitoring of the cleaning by the fluid distribution system can be further improved and can become more efficient. Here, the control of the at least one valve by the control signal can be related to the measured pressure. Hence, it can be evaluated if the cleaning based on the time the at least one valve was open can be sufficient. In addition, other problems, for example a leakage can be easily distinguished from a cleaning. Further, for example, if the measured pressure cannot change besides a send control signal, the at least one pressure sensor and/or the at least one valve can be broken. Thus, the fluid distribution system can be quick and environmentally friendly.

For example, the control means can be configured to adapt the control signal based on the comparison of the control signal with the measured pressure to monitor the cleaning. For example, if the cleaning can be insufficient the control signal can open the at least one valve for a longer time.

In an embodiment the control means can be configured to monitor the cleaning by comparison of the measured pressure and a comparative pressure.

In this way, the result of the cleaning can be quickly, easily and efficiently monitored. Since the measured pressure can correlate for example with the cleaning time and the amount of fluid under pressure used, the measured pressure can correlate with the efficiency of the cleaning. By providing a comparative pressure for comparison the fluid distribution system can quickly evaluate the cleaning.

The comparative pressure can be one value. The comparative pressure can be a pressure curve. The comparative pressure can be a set of values or pressure curves. For example, various pressure curves can be provided for different circumstances, like for example temperatures, environments and/or seasons. For example, the fluid can be more viscous at lower temperatures so that the comparative pressure for a sufficient cleaning can differ from a comparative pressure at a higher temperature. The comparative pressure can be determined by artificial intelligence. For example, the artificial intelligence can determine a comparative pressure based on supporting data.

In an embodiment the connection means can comprise a flow-through passage, wherein the flow-through passage can be arranged such that any fluid flowing from the at least one high pressure fluid source to the at least one valve can have to pass through the flow-through passage, wherein the at least one pressure sensor can be configured to measure the pressure at the flow-through passage.

In this way, the fluid distribution system can quickly and efficiently monitor the cleaning of the sensor. The measured pressure at the flow-through passage can be influenced reliably and clearly by the cleaning. Hence, the monitoring can be improved. Hence, the cleaning can be improved so that the fluid distribution system can be environmentally friendly.

The flow-through passage can be a section of the connection means. For example, the flow-through passage can be part of a tube, a hose, a distributor and/or a joint. In particular, the at least one pressure sensor can be arranged at the flow-through passage.

The flow-through passage can be arranged such that any fluid flowing from the at least one high pressure fluid source to the at least one valve can have to pass through the flow-through passage. For example, the flow-through passage can fluidly connect the at least one high pressure fluid source and the at least one valve. For example, the flow-through passage can be a hose between the at least one high pressure fluid source and the at least one valve. For example, there can be no secondary line besides the flow-through passage.

In an embodiment the fluid distribution system can comprise only one pressure sensor. If the fluid distribution system can only have one pressure sensor the fluid distribution system can be very efficient and cost-effective.

For example, the only one pressure sensor can be configured to measure the pressure at the flow-through passage. In particular, the only one pressure sensor can be arranged at the flow-through passage.

In an embodiment the fluid distribution system can be configured so that, when the at least one valve can be in a closed state, the fluid under pressure delivered by the high pressure fluid source can be accumulated in the connection means, and sprayed under high pressure by the at least one nozzle when the at least one valve can be in an open state.

In doing so, the fluid under pressure can be directly and quickly available so that the fluid distribution system can clean the sensor very quickly.

The fluid under pressure delivered by the high pressure fluid source can be accumulated in the connection means can mean that the fluid under pressure can also be stored in the connection means.

In an embodiment the at least one valve can be arranged at the at least one nozzle, or wherein the at least one valve can be in one piece with the at least one nozzle.

If the at least one valve can be arranged at the at least one nozzle, the fluid distribution system can be very quick and efficient since the fluid under pressure can be very close to the at least one nozzle. In addition, the fluid distribution system can be cost-effective since separate parts can be used.

If the at least one valve can be in one piece with the at least one nozzle, the fluid distribution system can work even quicker since the fluid under pressure can be stored also partially in the at least one nozzle.

The at least one valve can be arranged at the at least one nozzle. For example, the at least one valve can be arranged as close to the at least one nozzle as possible. For example, the at least one valve can be arranged so close to the at least one nozzle so that a repair or replacement of the at least one valve or the at least one nozzle can be possible.

In an embodiment the fluid distribution system can comprise at least two high pressure fluid sources.

In this way, a continuous supply of fluid under pressure can be assured, since one of the at least two high pressure fluid sources can be filled while the other one of the at least two high pressure fluid sources can be used for cleaning. Hence, the efficiency of the fluid distribution system can be increased, while at the same time a quick cleaning can be guaranteed.

The at least two high pressure fluid sources can both be connected to the at least one valve. The at least two high pressure fluid sources can be connected to the at least one valve in parallel.

In an embodiment the flow-through passage can be arranged such that any fluid from the at least two high pressure fluid sources to the at least one valve can have to pass through the flow-through passage.

In this way, the fluid distribution system can be designed very cost effectively. In addition, for example, the at least one pressure sensor can be configured to measure the pressure at the flow-through passage.

In an embodiment the fluid distribution system can comprise at least two nozzles and at least two valves, wherein each of the at least two valves can be configured to regulate the flow through one of the at least two nozzles.

In this way, the cleaning by the fluid distribution system can be improved since the cleaning power can be increased.

In an embodiment the control means can be configured to monitor the cleaning by each of the at least two nozzles based on the measured pressure.

In doing so, the monitoring can be improved since the cleaning by each of the at least two nozzles can be monitored efficiently. The measured pressure can correlate to the ejection of the fluid under pressure. In addition, for example, the measured pressure can differ for the cleaning by each of the at least two nozzles. For example, due to different tubes length from the at least one high pressure fluid source to each of the at least two nozzles the measured pressure can differ during a cleaning by each of the at least two nozzles. Therefore, the fluid distributions system can distinguish the cleaning by each of the at least two nozzles. Moreover, even the cleaning by both of the at least two nozzles at the same time can lead to a distinguishable measured pressure, since, for example, the measured pressure can drop quicker. Thus, the fluid distribution system can provide a quick, monitored and efficient cleaning of the sensor.

The measured pressure can be influenced by the opening and/or the closing of the at least two valves. For example, a reduction of the measured pressure can correlate with the opening of the at least two valves. For example, the reduction of the measured pressure can be larger if both of the at least two valves can be opened at the same time than if only one of the at least two valves can be opened. Especially, the control means can monitor the opening of the at least two valves based on the reduction of the measured pressure. For example, a stepwise reduction of the measured pressure can indicate the opening of the at least two valves one after the other.

In addition, for example, the increase of the measured pressure can correlate with the closing of the at least two valves. In particular, a measured pressure peak higher than the average pressure can indicate the closing of the at least two valves. Especially, the control means can monitor the closing of the at least two valves based on the increase of the measured pressure, preferably based on the measured pressure peak. For example, a stepwise increase of the measured pressure can indicate the closing of the at least two valves one after the other.

Further, for example, the time difference between the reduction of the measured pressure and the increase of the measured pressure, in particular a measured pressure peak, can indicate the cleaning time. Especially, the control means can monitor the cleaning time based on the time difference between the reduction of the measured pressure and the increase of the measured pressure, in particular a measured pressure peak. For example, a stepwise reduction of the measured pressure and/or a stepwise increase of the measured pressure stepwise can indicate different cleaning times for each of the at least two valves.

For example, the control means can be configured to monitor the cleaning by each of the at least two nozzles based on the measured pressure simultaneously. For example, the control means can be configured to monitor the cleaning by each of the at least two nozzles based on the measured pressure individually and simultaneously.

In an embodiment the flow-through passage can be arranged such that any fluid from the at least one high pressure fluid source to the at least two valves must pass through the flow-through passage. In this way, the fluid distribution system can be designed very cost effectively. In addition, for example, the at least one pressure sensor can be configured to measure the pressure at the flow-through passage. In doing so, the at cleaning can be monitored by the at least one pressure sensor configured to measure the pressure at the flow-through passage so that the fluid distribution system can be very cost-effective while at the same time it can provide a quick, monitored efficient and environmentally friendly cleaning of the sensor.

In an embodiment the fluid distribution system can comprise a main fluid tank, wherein the fluid distribution system can comprise a filling means, wherein the filling means can be configured to fill the at least one high pressure fluid source with fluid from the main fluid tank.

In this way, the fluid distribution system can be more efficient since a larger amount of fluid can be provided. Moreover, due to the larger amount of fluid the fluid distribution system can provide an improved efficiency and quickness. In addition, the fluid distribution system can be safer since less fluid under pressure can be stored.

The main fluid tank can be a reservoir. The main fluid tank can be configured to store the fluid. The main fluid tank can be configured to provide the fluid at atmospheric pressure.

The filling means can be a pump. The filling means can be configured to fill the at least one high pressure fluid source with fluid from the main fluid tank. The filling means can be fluidly connected to the main fluid tank and the at least one high pressure fluid source. The filling means can be configured to pump fluid from the main fluid tank to the high pressure fluid source.

In an embodiment the fluid distribution system can comprise a compression means configured to inject air into the at least one high pressure fluid source.

In this way, the fluid distribution system can be very efficient and environmentally friendly, since ambient air can be used to increase the pressure in the at least one high pressure fluid source.

In an embodiment the fluid can be water or water with detergent. In this way, the cleaning can be very efficient and environmentally friendly.

In an embodiment the fluid distribution system can comprise a high-pressure air source, wherein the fluid distribution system can comprise at least one air nozzle, wherein the fluid distribution system can comprise at least one air valve configured to regulate the flow through the at least one air nozzle, wherein the fluid distribution system can comprise an air connection means, wherein the air connection means can fluidly connect the at least one high-pressure air source and the at least one air valve.

In doing so, the fluid distribution system can blow off any liquid on the sensor. For example, the liquid can be remaining from the cleaning. Thus, the functionality of the sensor can be established very quickly. Additionally or alternatively, the liquid can be caused by the weather like rain or snow. Thus, the fluid distribution system can clean the sensor also very quickly. In addition, the system can be very environmentally friendly as ambient air can be used. Therefore, the fluid distribution system can provide a quick, efficient, environmentally friendly and monitored cleaning.

The high-pressure air source can be a container. The high-pressure air source can be configured to store the air under pressure. The high-pressure air source can be configured to provide the air under a pressure above atmospheric pressure. The high-pressure air source can be configured to provide the air under pressure between 4 bars and 10 bars, preferably between 7 bars and 9 bars.

The at least one air nozzle can be configured to spray the air on the sensor. The at least one air nozzle can be configured to eject the air under pressure. The at least one air nozzle can be configured to direct the air on the sensor. The at least one air nozzle can be configured to remove any liquid from the sensor. The at least one air nozzle can be configured to adapt the spray pattern to the sensor dimensions. The at least one air nozzle can be configured to dry the sensor.

The at least one air valve can be, for example, a magnetic valve. The at least one air valve can have two conditions, for example open or closed. The at least one air valve can have multiple conditions to regulate the air flow rate. The at least one air valve can be electrically controllable. The at least one air valve is configured to regulate the flow through the at least one air nozzle. The regulation of the flow through the at least one air nozzle can distinguish between two states, namely open or closed. The regulation of the flow through the at least one air nozzle can distinguish between multiple states with different air flow rates.

The air connection means can comprise, for example, tubes, hoses, distributors and/or joints. The air connections means can be linear or the air connection means can be branched. The air connection means can be impermeable to the air.

The air connection means fluidly can connect the at least one high-pressure air source and the at least one air valve. For example, the air connection means can fluidly connect the at least one high-pressure air source and the at least one air valve by tubes, hoses, distributors and/or joints. For example, by the air connections means the air can be transported loss-free from the at least one high-pressure air fluid source to the at least one air valve.

According to a second aspect of the invention the above-mentioned task is solved by a method for monitoring the cleaning of a sensor surface of a motor vehicle using a fluid distribution system according to the invention, comprising the following steps:
- providing the fluid under pressure,
- spraying the fluid under pressure, and
- measuring a pressure.

The method provides the advantage of a quick, monitored efficient and environmentally friendly cleaning of the sensor. Due to the at least one pressure sensor the pressure in the connection means is measured. Based on the measured pressure the cleaning of the sensor can be evaluated. For example, the measured pressure can refer to the amount of fluid used, the cleaning time and/or the force of the fluid on the sensor. Thus, based on the measured pressure the cleaning of the sensor can be evaluated. In addition, the measured pressure provides an easy way to quickly monitor the cleaning. Hence, the method is efficient. Moreover, the monitoring of the cleaning by the measured pressure leads to an efficient and thus environmentally friendly cleaning.

For example, the fluid under pressure can be provided by the at least one high pressure fluid source. For example, the fluid under pressure can be sprayed by the at least one nozzle. For example, the pressure can be measured by the at least one pressure sensor.

For example, measuring a pressure can be done at least during spraying the fluid under pressure.

In an embodiment the method comprises the steps:
- sending the measured pressure to the control means, and/or
- sending the control signal from the control means to the at least one valve to open and/or to close the at least one valve.

If the at least one pressure sensor can send the measured pressure to the control means, the control means can collect the data of the pressure simplifying the monitoring. For example, based on the measured pressure the control means can determine if the fluid under pressure can have sufficient pressure. In particular, the functionality of the fluid distribution system and hence of the cleaning can be monitored. Hence, the method can provide a quick, monitored efficient and environmentally friendly cleaning of the sensor.

If the control means can send a control signal to the at least one valve to open and/or to close the at least one valve, the control can be simplified and hence more efficient.

If the at least one pressure sensor can be configured to send the measured pressure to the control means, and wherein the control means can be configured to send a control signal to the at least one valve to open and/or to close the at least one valve, the method can easily and efficiently monitor the cleaning.

In an embodiment the method comprises the steps:
- monitoring the cleaning based on the measured pressure.

To clean the sensor the fluid under pressure can be ejected by the at least one nozzle. The ejection of the fluid under pressure can lead to a pressure drop which can correlate to the amount of used cleaning fluid, cleaning time and thus to the cleaning of the sensor. Therefore, the method can provide a quick, monitored efficient and environmentally friendly cleaning of the sensor.

In an embodiment the method comprises the steps:
- comparing the control signal with the measured pressure to monitor the cleaning.

In doing so, the monitoring of the cleaning by the method can be further improved and can become more efficient. Here, the control of the at least one valve by the control signal can be related to the measured pressure. Hence, it can be evaluated if the cleaning based on the time the at least one valve can be open can be sufficient. In addition, other problems for example a leakage can be easily distinguished from a cleaning. Further, for example, if the measured pressure cannot change besides a send control signal, the at least one pressure sensor and/or the at least one valve can be broken. Thus, the method can be quick and environmentally friendly.

In an embodiment the method comprises the steps:
- comparing the measured pressure to a comparative pressure to monitor the cleaning.

In this way, the result of the cleaning can be quickly, easily and efficiently monitored. Since the measured pressure can correlate for example with the cleaning time and the amount of fluid under pressure used, the measured pressure can correlate with the efficiency of the cleaning. By providing the comparative pressure for comparison the method can quickly evaluate the cleaning.

For example, spraying the fluid under pressure can be for less than 200 ms, preferably less than 150 ms, and most preferably less than 100 ms.

For example, the method can comprise the step:
- drying the sensor, in particular by the air nozzle.

According to a third aspect of the invention the above-mentioned task is solved by a motor vehicle comprising a fluid distribution system according to the invention.

In doing so, the motor vehicle provides a quick, monitored efficient and environmentally friendly cleaning of the sensor. Due to the at least one pressure sensor the pressure in the connection means is measured. Based on the measured pressure the cleaning of the sensor can be evaluated. For example, the measured pressure can refer to the amount of fluid used, the cleaning time and/or the force of the fluid on the sensor. Thus, based on the measured pressure the cleaning of the sensor can be evaluated. In addition, the measured pressure provides an easy way to quickly monitor the cleaning. Hence, the motor vehicle is efficient. Moreover, the monitoring of the cleaning by the measured pressure leads to an efficient and thus environmentally friendly cleaning. Moreover, the motor vehicle guarantees a continuous and safe drive.

According to a fourth aspect of the invention the above-mentioned task is solved by a computer-readable medium on which commands are stored which permit one or more computers to carry out a method according to the invention.

Other objects, features, advantages and aspects of the present invention will become apparent to those skilled in the art from the following description and appended claims. It should be understood, however, that the following description, appended claims, and specific examples, which indicate preferred embodiments of the application, are given by way of illustration only. Various changes and modifications within the spirit and scope of the disclosed invention will become readily apparent to those skilled in the art from reading the following.

### DEFINITIONS

As used herein, the following expressions are generally intended to preferably have the meanings as set forth below, except to the extent that the context in which they are used indicates otherwise.

The expression "comprise", as used herein, besides its literal meaning also includes and specifically refers to the expressions "consist essentially of" and "consist of". Thus, the expression "comprise" refers to embodiments wherein the subject-matter which "comprises" specifically listed elements does not comprise further elements as well as embodiments wherein the subject-matter which "comprises" specifically listed elements may and/or indeed does encompass further elements. Likewise, the expression "have" is to be understood as the expression "comprise", also including and specifically referring to the expressions "consist essentially of" and "consist of". The term "consist essentially of", where possible, in particular refers to embodiments wherein the subject-matter comprises 20% or less, in particular 15% or less, 10% or less or especially 5% or less further elements in addition to the specifically listed elements of which the subject-matter consists essentially of.

### FIGURES

- **Fig. 1**: a schematic view of a fluid distribution system;
- **Fig. 2**: a schematic view of a fluid distribution system;
- **Fig. 3**: a schematic view of a fluid distribution system;
- **Fig. 4**: a schematic view of a fluid distribution system;
- **Fig. 5**: a measured pressure;
- **Fig. 6**: section of the measured pressure shown in Fig. 5;
- **Fig. 7**: a measured pressure;
- **Fig. 8**: control means.

### DETAILED DESCRIPTION OF THE INVENTION

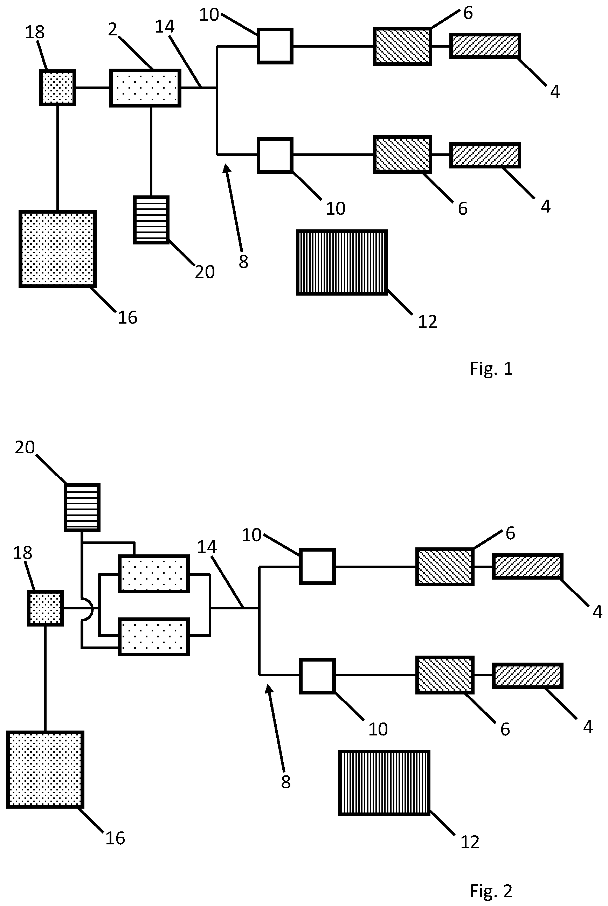

Fig. 1 shows a schematic view of a fluid distribution system for the monitored cleaning of a sensor of a motor vehicle. The fluid distribution system comprises a high pressure fluid source 2 configured to provide a fluid under pressure. The fluid distribution system comprises two nozzles 4. The fluid distribution system comprises two valves 6 configured to regulate the flow through the nozzles 4. The fluid distribution system comprises a connection means 8, wherein the connection means 8 fluidly connects the high pressure fluid source 2 and the valves 6. The fluid distribution assembly comprises two pressure sensors 10, wherein the pressure sensors 10 are configured to measure a pressure in the connection means 8.

The fluid distribution system comprises two nozzles 4 and two valves 6, wherein each of the two valves 6 is configured to regulate the flow through one of the two nozzles 4.

The fluid distribution system comprises a control means 12. The pressure sensors 10 are configured to send the measured pressure to the control means 12. The control means 12 is configured to send a control signal to the valves 6 to open and/or to close the valves 6.

The control means 12 is configured to monitor the cleaning based on the measured pressure. The control means 12 is configured to compare the control signal with the measured pressure to monitor the cleaning. The control means 12 is configured to monitor the cleaning by comparison of the measured pressure and a comparative pressure.

The fluid distribution system comprises a main fluid tank 16. The fluid distribution system comprises a filling means 18, wherein the filling means 18 is configured to fill the high pressure fluid source 2 with fluid from the main fluid tank 16.

The fluid distribution system comprises a compression means 20 configured to inject air into the at least one high pressure fluid source 2.

The fluid distribution system is configured so that, when the valves 6 are in a closed state, the fluid under pressure delivered by the high pressure fluid source 2 is accumulated in the connection means 8, and sprayed under high pressure by at least one of the two nozzles 4 when at least one valve 6 is in an open state.

Fig. 2 shows a schematic view of a fluid distribution system for the monitored cleaning of a sensor of a motor vehicle. The fluid distribution system comprises two high pressure fluid sources 2 configured to provide a fluid under pressure. The fluid distribution system comprises two nozzles 4. The fluid distribution system comprises two valves 6 configured to regulate the flow through the nozzles 4. The fluid distribution system comprises a connection means 8, wherein the connection means 8 fluidly connects the high pressure fluid sources 2 and the valves 6. The fluid distribution assembly comprises two pressure sensors 10, wherein the pressure sensors 10 are configured to measure a pressure in the connection means 8.

The fluid distribution system comprises two nozzles 4 and two valves 6, wherein each of the two valves 6 is configured to regulate the flow through one of the two nozzles 4.

The fluid distribution system comprises a control means 12. The pressure sensors 10 are configured to send the measured pressure to the control means 12. The control means 12 is configured to send a control signal to the valves 6 to open and/or to close the valves 6.

The control means 12 is configured to monitor the cleaning based on the measured pressure. The control means 12 is configured to compare the control signal with the measured pressure to monitor the cleaning. The control means 12 is configured to monitor the cleaning by comparison of the measured pressure and a comparative pressure.

The fluid distribution system comprises a main fluid tank 16. The fluid distribution system comprises a filling means 18, wherein the filling means 18 is configured to fill the high pressure fluid source 2 with fluid from the main fluid tank 16.

The fluid distribution system comprises a compression means 20 configured to inject air into the at least one high pressure fluid source 2.

The fluid distribution system is configured so that, when the valves 6 are in a closed state, the fluid under pressure delivered by the high pressure fluid source 2 is accumulated in the connection means 8, and sprayed under high pressure by at least one of the two nozzles 4 when at least one valve 6 is in an open state.

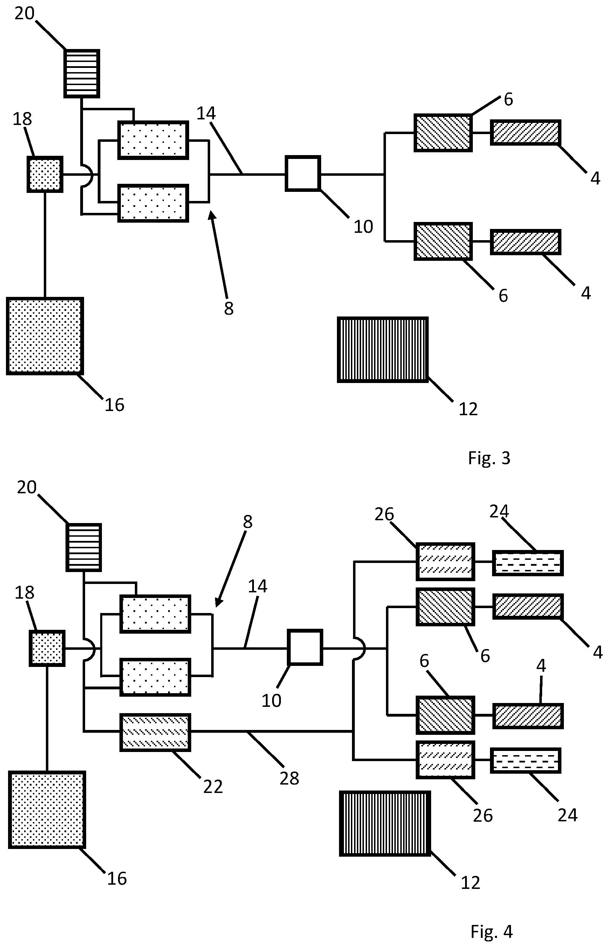

Fig. 3 shows a schematic view of a fluid distribution system for the monitored cleaning of a sensor of a motor vehicle. The fluid distribution system comprises two high pressure fluid sources 2 configured to provide a fluid under pressure. The fluid distribution system comprises two nozzles 4. The fluid distribution system comprises two valves 6 configured to regulate the flow through the nozzles 4. The fluid distribution system comprises a connection means 8, wherein the connection means 8 fluidly connects the high pressure fluid sources 2 and the valves 6. The fluid distribution assembly comprises only one pressure sensor 10, wherein the pressure sensor 10 is configured to measure a pressure in the connection means 8.

The connection means 8 comprises a flow-through passage 14. The flow-through passage 14 is arranged such that any fluid flowing from the high pressure fluid sources 2 to the valves 6 must pass through the flow-through passage 14. The pressure sensor 10 is configured to measure the pressure at the flow-through passage 14.

The fluid distribution system comprises two nozzles 4 and two valves 6, wherein each of the two valves 6 is configured to regulate the flow through one of the two nozzles 4.

The fluid distribution system comprises a control means 12. The pressure sensor 10 is configured to send the measured pressure to the control means 12. The control means 12 is configured to send a control signal to the valves 6 to open and/or to close the valves 6.

The control means 12 is configured to monitor the cleaning based on the measured pressure. The control means 12 is configured to compare the control signal with the measured pressure to monitor the cleaning. The control means 12 is configured to monitor the cleaning by comparison of the measured pressure and a comparative pressure.

The fluid distribution system comprises a main fluid tank 16. The fluid distribution system comprises a filling means 18, wherein the filling means 18 is configured to fill the high pressure fluid source 2 with fluid from the main fluid tank 16.

The fluid distribution system comprises a compression means 20 configured to inject air into the at least one high pressure fluid source 2.

The fluid distribution system is configured so that, when the valves 6 are in a closed state, the fluid under pressure delivered by the high pressure fluid source 2 is accumulated in the connection means 8, and sprayed under high pressure by at least one of the two nozzles 4 when at least one valve 6 is in an open state.

Fig. 4 essentially corresponds to Fig. 3, so that only the differences to Fig. 3 are explained. The fluid distribution system comprises a high-pressure air source 22. The fluid distribution system comprises two air nozzles 24. The fluid distribution system comprises two air valves 26 configured to regulate the flow through the air nozzles 24. The fluid distribution system comprises an air connection means 28. The air connection 28 means fluidly connects the high-pressure air source 22 and the air valves 26.

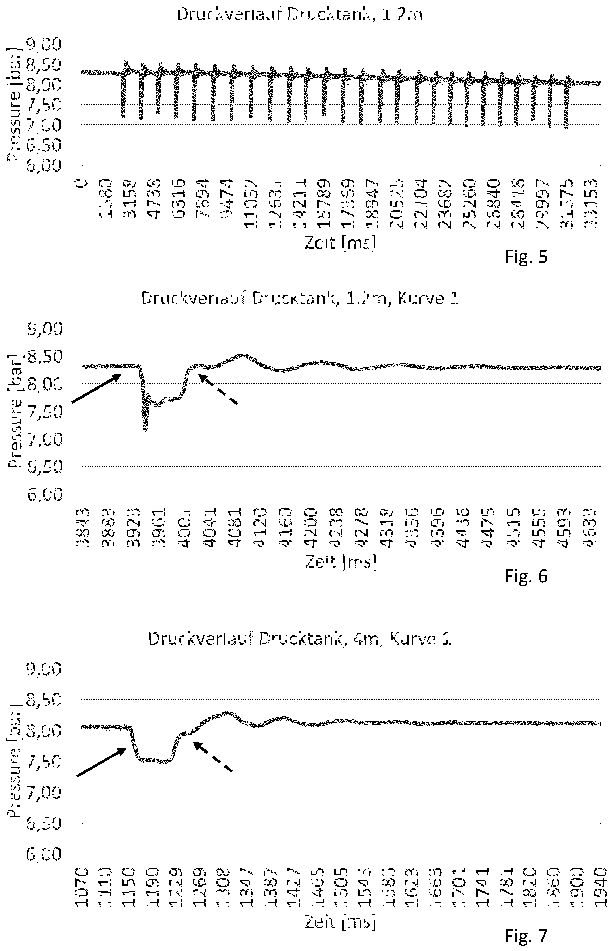

Fig. 5 shows a measured pressure for a nozzle 4 which is 1.2 m away from the high pressure fluid source 2. The distance of 1.2 m is defined by the route the fluid under pressure travels from the high pressure fluid source 2 to the nozzle 4. Each reduction of the measured pressure is a cleaning. Due to the opening of the valve 6 and the spraying of the fluid under pressure by the nozzle 4, the measured pressure drops. As soon as the valve 6 is closed the measured pressure increases again.

Fig. 6 shows a section of the measured pressure shown in Fig. 5. In Fig. 6 the reduction of the measured pressure due to a cleaning and hence an opening of the valve 6 is shown and afterwards the increase of the measured pressure after closing the valve 6. The reduction of the measured pressure is indicated by a continuous arrow and the increase of the measured pressure is indicated by a dashed arrow.

Fig. 7 shows a measured pressure for a nozzle 4 which is 4 m away from the high pressure fluid source 2. The pressure is measured by the same pressure sensor 10 as the measured pressure shown in Fig. 5 and Fig. 6. In Fig. 7 the drop of the measured pressure is shown and afterwards the recovery of the measured pressure after closing the valve 6. The reduction of the measured pressure is indicated by a continuous arrow and the increase of the measured pressure is indicated by a dashed arrow.

As shown by the comparison of the measured pressure in Fig. 6 and Fig. 7, the curve of the measured pressure differs for the cleaning by different nozzles 4. Hence, based on the measured pressure the cleaning by individual nozzles 4 is monitored.

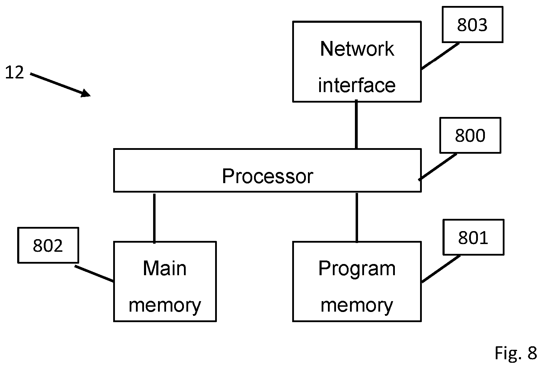

Fig. 8 shows a control means 12. The control means 12 comprises a processor 800 and, connected to the processor 800, a first memory as a program memory 801, a second memory as a main memory 802 and a network interface 803.

A processor 800 is to be understood to mean, for example, a microprocessor (Central Processing Unit, CPU), a digital signal processor (DSP), an application-specific integrated circuit (ASIC), a microcontroller, a micro-control unit, a field-programmable gate array (FPGA), or a graphics processor (Graphics Processing Unit, GPU). It is understood that the control means 12 can also include several processors 800.

The processor 800 executes program instructions that are stored in program memory 801 and stores, for example, intermediate results or the like in main memory 802. The use of an (additional) graphical processor can be advantageous, for example, for executing machine learning algorithms and/or artificial neural networks.

Program memory 801, for example, stores program instructions that cause processor 800, when executing the program instructions, to at least partially execute and/or control the method according to the second aspect of the invention. Alternatively or additionally, program memory 801 stores, for example, program instructions that cause processor 800, when executing the program instructions, to execute and/or control the method according to the second aspect of the invention at least partially.

Program memory 801 further contains, for example, the operating system of the control means 12, which is at least partially loaded into main memory 802 when the control means 12 is started and executed by processor 800.

An example of an operating system is a Windows, UNIX, Linux, Android, Apple iOS and/or MAC OS operating system. In particular, the operating system enables the control means 12 to be used for data processing. For example, it manages resources such as a main memory and a program memory, makes basic functions available to other computer programs, among other things, through programming interfaces, and controls the execution of computer programs.

A program memory 801 is, for example, a non-volatile memory such as a flash memory, an EEPROM memory (electrically erasable programmable read-only memory), a magnetic memory and/or an optical memory. A main memory 802, for example, is a volatile or non-volatile memory, in particular a random access memory (RAM) such as a static RAM memory (SRAM), a ferroelectric RAM memory (FeRAM), a dynamic RAM memory (DRAM) and/or a magnetic RAM memory (MRAM).

Main memory 802 and program memory 801 can also be designed as a single memory. Alternatively, main memory 802 and/or program memory 801 can each be formed by several memories. Furthermore, main memory 802 and/or program memory 801 can also be part of processor 800.

Processor 800 controls network interface 803, which is set up, for example, to exchange information (e.g. send and/or receive) with a remote device via a connection in a communication network. In the following, it is assumed, by way of example, that network interface 803 is a wired network interface. An example of a wired network interface is an Ethernet interface. For example, control means 12 can use network interface 803 to output information such as the measured pressure. For this purpose, network interface 803 can be connected, for example, to a screen and/or a loudspeaker.

Components 800 to 803 of the control means 12 are communicatively and/or operatively connected to each other, for example, via one or more bus systems (e.g. one or more serial and/or parallel bus connections).

It is understood that the control means 12 may comprise further components (e.g. a user interface) in addition to the components 800 to 803. The device may be connected to an output device such as a display screen and/or a loudspeaker.

## Claims

1. A fluid distribution system for the monitored cleaning of a sensor of a motor vehicle,
wherein the fluid distribution system comprises at least one high pressure fluid source (2) configured to provide a fluid under pressure,
wherein the fluid distribution system comprises at least one nozzle (4),
wherein the fluid distribution system comprises at least one valve (6) configured to regulate the flow through the at least one nozzle (4),
wherein the fluid distribution system comprises a connection means (8),
wherein the connection means (8) fluidly connects the at least one high pressure fluid source (2) and the at least one valve (6),
**characterized in that**
the fluid distribution assembly comprises at least one pressure sensor (10),
wherein the at least one pressure sensor (10) is configured to measure a pressure in the connection means (8).

2. A fluid distribution system according to claim 1,
**characterized in that**
the fluid distribution system comprises a control means (12),
wherein the at least one pressure sensor (10) is configured to send the measured pressure to the control means (12), and/or
wherein the control means (12) is configured to send a control signal to the at least one valve (6) to open and/or to close the at least one valve (6).

3. A fluid distribution system according to claim 1 or 2,
**characterized in that**
the control means (12) is configured to monitor the cleaning based on the measured pressure.

4. A fluid distribution system according to any one of claims 1 to 3,
**characterized in that**
the control means (12) is configured to compare the control signal with the measured pressure to monitor the cleaning.

5. A fluid distribution system according to claim 3 or 4,
**characterized in that**
the control means (12) is configured to monitor the cleaning by comparison of the measured pressure and a comparative pressure.

6. A fluid distribution system according to any one of claims 1 to 5,
**characterized in that**
the connection means (8) comprises a flow-through passage (14),
wherein the flow-through passage (14) is arranged such that any fluid flowing from the at least one high pressure fluid source (2) to the at least one valve (6) must pass through the flow-through passage (14),
wherein the at least one pressure sensor (10) is configured to measure the pressure at the flow-through passage (14).

7. A fluid distribution system according to any one of claims 1 to 6,
**characterized in that**
the fluid distribution system comprises at least two high pressure fluid sources (2).

8. A fluid distribution system according to any one of claims 1 to 7,
**characterized in that**
the fluid distribution system comprises at least two nozzles (4) and at least two valves (6),
wherein each of the at least two valves (6) is configured to regulate the flow through one of the at least two nozzles (4).

9. A fluid distribution system according to any one of claims 1 to 8,
**characterized in that**
the control means (12) is configured to monitor the cleaning by each of the at least two nozzles (4) based on the measured pressure.

10. A fluid distribution system according to any one of claims 1 to 9,
**characterized in that**
the fluid distribution system comprises a main fluid tank (16),
wherein the fluid distribution system comprises a filling means (18),
wherein the filling means (18) is configured to fill the at least one high pressure fluid source (2) with fluid from the main fluid tank (16).

11. A fluid distribution system according to any one of claims 1 to 10,
**characterized in that**
the fluid distribution system comprises a compression means (20) configured to inject air into the at least one high pressure fluid source (2).

12. A fluid distribution system according to any one of claims 1 to 11,
**characterized in that**
the fluid distribution system comprises a high-pressure air source (22),
wherein the fluid distribution system comprises at least one air nozzle (24),
wherein the fluid distribution system comprises at least one air valve (26) configured to regulate the flow through the at least one air nozzle (24),
wherein the fluid distribution system comprises an air connection means (28),
wherein the air connection (28) means fluidly connects the at least one high-pressure air source (22) and the at least one air valve.

13. Method for monitoring the cleaning of a sensor surface of a motor vehicle using a fluid distribution system according to any one of claims 1 to 12, comprising the following steps:
- providing the fluid under pressure,
- spraying the fluid under pressure, and
- measuring a pressure.

14. Motor vehicle comprising a fluid distribution system according to any one of claims 1 to 12.

15. Computer-readable medium on which commands are stored which permit one or more computers to carry out a method according to claim 13.
